(19) Europäisches Patentamt
European Patent Office
Office européen des brevets

(11) **EP 4 589 434 A1**

(12) **EUROPEAN PATENT APPLICATION**
published in accordance with Art. 153(4) EPC

(43) Date of publication:
**23.07.2025 Bulletin 2025/30**

(21) Application number: **23878662.8**

(22) Date of filing: **19.06.2023**

(51) International Patent Classification (IPC):
***G06F 9/50*** (2006.01)

(52) Cooperative Patent Classification (CPC):
**G06F 9/50; G06F 17/13**

(86) International application number:
**PCT/CN2023/101175**

(87) International publication number:
**WO 2024/082665 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.10.2022 CN 202211275678**

(71) Applicant: **Huawei Technologies Co., Ltd.
Shenzhen, Guangdong 518129 (CN)**

(72) Inventors:
• **WANG, Xinliang
  Shenzhen, Guangdong 518129 (CN)**
• **WANG, Qin
  Shenzhen, Guangdong 518129 (CN)**
• **DING, Zhaohui
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **PRECONDITIONER PROCESSING METHOD, APPARATUS, DEVICE AND SYSTEM**

(57) This application provides a preconditioner processing method and apparatus, a device, and a system, relates to the computer field, and is applied to a computing device for solving a partial differential equation. The method includes: A preconditioner processing device first determines a thread dependency of at least one thread computing task to be executed by a preconditioner, and then all of a plurality of threads of the preconditioner processing device sequentially execute, based on a sequence of memory access, to-be-executed thread computing task whose dependent thread computing tasks are in an executed state, to implement multi-thread parallel execution of the preconditioner. **In** this way, a dependency between threads in a computing task of the preconditioner is determined, so that full thread synchronization between layers is converted into point-to-point synchronization between threads, thereby reducing time consumed for synchronization between layers and improving parallel execution efficiency of the preconditioner.

Preconditioner processing device 302

Step 410: Determine a thread dependency of at least one thread computating task

Step 420: Each of a plurality of threads executes a to-be-executed thread computing task based on the thread dependency, where at least one dependent thread computing task associated with the to-be-executed thread computing task is in an executed state

Step 430: Output a preconditioner computing result based on an execution result of the at least one thread computing task

FIG. 4

## Description

This application claims priority to Chinese Patent Application No. 202211275678.1, filed with the China National Intellectual Property Administration on October 18, 2022 and entitled "PRECONDITIONER PROCESSING METHOD AND APPARATUS, DEVICE, AND SYSTEM", which is incorporated herein by reference in its entirety.

## TECHNICAL FIELD

This application relates to the computer field, and in particular, to a preconditioner processing method and apparatus, a device, and a system.

## BACKGROUND

A problem of solving a partial differential equation in high-performance computing of a computer may be transformed into a problem of solving large-scale sparse linear equations. During iterative solving of the large-scale sparse linear equations, improvement of convergence and a convergence speed of an iterative matrix not only depends on an iterative method and selection of a parameter in the iterative matrix, but also is closely related to some changes of the equations, especially an introduction of a preconditioner (preconditioner). This greatly improves the convergence and the convergence speed of iteration.

The preconditioner is used to preprocess the large-scale sparse linear equations, which can improve the convergence speed of the large-scale sparse linear equations. However, data used for preprocessing by using the preconditioner is correlated, that is, a part of subsequent computing tasks of the preconditioner usually needs to depend on a result of an earlier computing task, parallel processing of the part of preconditioners wastes a large amount of time for waiting for the earlier computing task, resulting in low parallel execution efficiency of the preconditioner.

## SUMMARY

This application provides a preconditioner processing method and apparatus, a device, and a system, to resolve a problem that parallel execution efficiency of a preconditioner is low.

According to a first aspect, a preconditioner processing method is provided. The preconditioner processing method is performed by a preconditioner processing device. The preconditioner processing device includes a plurality of threads, and each thread is configured to execute, in a process of solving sparse matrix linear equations, at least one thread computing task included in a preconditioner. The method includes: When performing multi-thread parallel processing on sparse linear equations by using the preconditioner, the preconditioner processing device first determines a thread dependency of at least one thread computing task to be executed by the preconditioner. Then, all of the plurality of threads of the preconditioner processing device sequentially execute to-be-executed thread computing tasks whose dependent thread computing tasks are in an executed state. In addition, a preconditioner computing result is output based on an execution result of the at least one thread computing task. The thread dependency indicates a dependency of the at least one thread computing task, to be specific, for each thread computing task, the thread computing task can be executed when at least one dependent thread computing task associated with the thread computing task is in an executed state.

Based on the foregoing preconditioner processing method, compared with a conventional method in which a preconditioner executes computing tasks by using a plurality of threads in parallel based on a dependency between elements obtained through layering, all threads between layers need to be synchronized to ensure correctness, to be specific, a lower-layer element computing task can be executed only after all upper-layer element computing tasks are in an executed state, and when a quantity of parallel tasks is large, synchronization needs to occupy large overheads, in the solution provided in this application, the preconditioner processing device determines a dependency between threads in a computing task of the preconditioner, and the preconditioner processing device performs multi-thread parallel processing on the thread computing task based on the thread dependency, to convert full thread synchronization between layers into point-to-point synchronization between threads, to be specific, a lower-layer thread computing task can be executed after an upper-layer thread computing task on which the lower-layer thread computing task depends is in an executed state, so that time consumed for synchronization between layers is reduced, and parallel execution efficiency of the preconditioner is improved.

In a possible implementation, the preconditioner processing device converts, into the thread dependency based on an original sparse matrix of the sparse matrix linear equations, an element dependency existing in at least one element computing task included in the original sparse matrix. To be specific, for each thread, execution of a computing task that is at each layer and for which the thread is responsible needs to depend on whether an earlier computing task at a layer is executed by a thread. The element dependency indicates that at least one dependent element computing task needs to be in an executed state to execute an element computing task.

Optionally, the preconditioner processing device allocates, to a plurality of computing layers based on the element dependency, a plurality of element computing tasks included in the original sparse matrix, combines, into a thread computing task based on a task allocation result, element computing tasks that are at a same computing layer and that are executed by a same thread, and then determines the thread dependency of the at least one thread computing task based on the element dependency. The element computing tasks at the same computing layer can be simultaneously executed, and the task allocation result indicates which thread in the plurality of threads executes the element computing tasks. In this way, the preconditioner processing device integrates element computing tasks that belong to a same thread at each computing layer into one thread computing task. Each thread is responsible only for one thread computing task at each computing layer, and for a thread, a lower-layer thread computing task depends only on one upper-layer thread computing task, so that the thread dependency can be represented visually.

In a possible implementation, after determining the thread dependency, the preconditioner processing device further deletes a redundant dependency in the thread dependency of the at least one thread computing task. A dependency of a thread computing task indicated by the redundant dependency can be indirectly represented by a group of thread dependencies other than the redundant dependency. In this way, a quantity of thread dependencies is reduced, and a case in which a thread consumes a computing resource and time to confirm the redundant dependency before executing a thread computing task is avoided, so that inter-layer synchronization overheads are further reduced and parallel execution efficiency is improved.

In a possible implementation, after rearranging the original sparse matrix, the preconditioner processing device executes the at least one thread computing task by using the plurality of threads in parallel.

Optionally, the preconditioner processing device performs matrix rearrangement on the original sparse matrix based on the plurality of computing layers and a sequence of memory access to obtain a rearranged matrix. When executing thread computing tasks by using the plurality of threads in parallel, all of the plurality of threads sequentially execute to-be-executed thread computing tasks based on the rearranged matrix and the sequence of memory access. The sequence of memory access is a sequence of memory access of the plurality of threads for the at least one thread computing task, and the at least one thread computing task executed by the threads is arranged together in the rearranged matrix.

In this way, when performing respective computation, each thread may perform continuous memory access on a memory, and this helps fully utilize a memory bandwidth. In addition, the matrix rearrangement is to optimize memory access continuity, and does not change any dependency or dependency sequence. Therefore, a solving result of the preconditioner is not affected.

In a possible implementation, each thread in the preconditioner processing device determines, based on a flag bit, whether the thread dependency is satisfied. For example, the preconditioner processing device determines, based on a flag bit of the at least one thread computing task, whether at least one dependent thread computing task associated with a thread computing task is in an executed state, and if the dependent thread computing task is in an executed state, uses the thread computing task as the to-be-executed thread computing task. In this way, each thread in the preconditioner processing device quickly and accurately determines, by using the flag bit, whether the dependent thread computing task of the thread computing task is executed, so that overall efficiency of multi-thread parallel execution for the preconditioner is improved.

According to a second aspect, a preconditioner processing apparatus is provided. The apparatus executes a plurality of threads, and each thread is configured to execute at least one thread computing task included in a preconditioner. The apparatus includes modules configured to perform the preconditioner processing method according to any one of the first aspect or the possible implementations of the first aspect.

In a possible implementation, the preconditioner processing apparatus includes an analysis module and an execution module.

The analysis module is configured to determine a thread dependency of the at least one thread computing task, where the thread dependency indicates that each of the plurality of threads can execute a thread computing task when at least one dependent thread computing task associated with the thread computing task is in an executed state.

The execution module is configured to indicate the plurality of threads to execute to-be-executed thread computing tasks based on the thread dependency, where at least one dependent thread computing task associated with the to-be-executed thread computing task is in an executed state.

The execution module is further configured to output a preconditioner computing result based on an execution result of the at least one thread computing task.

Optionally, the analysis module is specifically configured to convert, into the thread dependency, an element dependency existing in at least one element computing task included in an original sparse matrix, where the element dependency indicates that at least one dependent element computing task needs to be in an executed state to execute an element computing task.

Optionally, the analysis module is specifically configured to: allocate, to a plurality of computing layers based on the element dependency, a plurality of element computing tasks included in the original sparse matrix, where element computing tasks at a same computing layer can be executed simultaneously; combine, into a thread computing task based on a task allocation result, element computing tasks that are at the same computing layer and that are executed by a same thread, where the task allocation result indicates which thread in the plurality of threads executes the element computing tasks; and determine the thread dependency of the at least one thread computing task based on the element dependency.

Optionally, the analysis module is further configured to delete a redundant dependency in the thread dependency of the at least one thread computing task. A dependency of a thread computing task indicated by the redundant dependency can be indirectly represented by a group of thread dependencies other than the redundant dependency.

Optionally, the preconditioner processing apparatus further includes a preparation module. The preparation module is configured to perform matrix rearrangement on the original sparse matrix based on the plurality of computing layers and a sequence of memory access, to obtain a rearranged matrix, where the sequence of memory access is a sequence of memory access of the plurality of threads for the at least one thread computing task, and the at least one thread computing task executed by the threads is arranged together in the rearranged matrix.

Optionally, the execution module is specifically configured to indicate all of the plurality of threads to sequentially execute the to-be-executed thread computing tasks based on the rearranged matrix and the sequence of memory access.

Optionally, the execution module is further configured to determine, based on a flag bit of the at least one thread computing task, that a thread computing task associated with at least one dependent thread computing task in an executed state is a to-be-executed thread computing task, where the flag bit indicates whether the thread computing task is in an executed state.

It should be noted that the preconditioner processing apparatus according to the second aspect may be a terminal device or a network device, or may be a chip (system) or another part or component that can be disposed in the terminal device or the network device, or may be an apparatus including the terminal device or the network device. This is not limited in this application.

According to a third aspect, a preconditioner processing device is provided, and includes a memory and a processor. The memory is configured to store a group of computer instructions, and when executing the group of computer instructions, the processor is configured to perform operation steps of the preconditioner processing method according to any possible design of the first aspect.

According to a fourth aspect, a computer system is provided, and includes an application server and a preconditioner processing device. The application server is configured to send, to the preconditioner processing device when computing a sparse linear equation, a request for solving sparse linear equations, and the preconditioner processing device is configured to perform operation steps of the preconditioner processing method according to any possible design of the first aspect.

In addition, for a technical effect of the preconditioner processing apparatus according to the second aspect, a technical effect of the preconditioner processing device according to the third aspect, and a technical effect of the computer system according to the fourth aspect, refer to the technical effect of the preconditioner processing method according to the first aspect. Details are not described herein again.

According to a fifth aspect, a computer-readable storage medium is provided, and includes computer software instructions. When the computer software instructions are run in a data processing system, a computing device is enabled to perform operation steps of the method according to any possible implementation of the first aspect.

According to a sixth aspect, a computer program product is provided. When the computer program product runs on a computer, a computing device is enabled to perform operation steps of the method according to any possible implementation of the first aspect.

In this application, the implementations according to the foregoing aspects may be further combined to provide more implementations.

## BRIEF DESCRIPTION OF DRAWINGS

FIG. 1 is a diagram of a coloring method according to this application;
FIG. 2 is a diagram of a layering method according to this application;
FIG. 3 is a diagram of a structure of a computer system according to this application;
FIG. 4 is a schematic flowchart of a preconditioner processing method according to this application;
FIG. 5 is a diagram of a task allocation result according to this application;
FIG. 6 is a diagram of matrix rearrangement according to this application;
FIG. 7 is a diagram of redundant dependency shearing according to this application;
FIG. 8 is a schematic flowchart of executing a computing task by a thread according to this application;
FIG. 9 is a diagram of a structure of a preconditioner processing apparatus according to this application; and
FIG. 10 is a diagram of a structure of a computing device according to this application.

## DESCRIPTION OF EMBODIMENTS

For ease of understanding, the following first describes related terms in embodiments of this application.

(1) Sparse linear equations

One of the most important tasks of high-performance computing is to resolve a key problem in the field, for example, a semiconductor, fluid mechanics, engineering mechanics, electromagnetics, biology, a material, or circuit simulation. Manners of resolving problems in critical fields are different, but usually include a similar key module: solving a partial differential equation, for example, the Poisson equation, the heat equation, the wave equation, or the Navier-Stokes equations.

Before solving the partial differential equation, a computer needs to discretize the equation. Based on a difference between discretization modes in a time dimension, a method may be classified into an explicit method and an implicit method. Both the explicit method and implicit method have advantages and disadvantages, and are widely used in the industry. In the implicit discretization method, a problem of solving the partial differential equation may be transformed into a problem of solving large-scale sparse linear equations.

Generally, linear equations may be written in a form of $Ax = b$. A is a coefficient matrix, b is a right-hand side vector, and x is a solution vector. A process of solving the linear equations is a process of obtaining solution vector x by using A and b. Generally, for a solvable problem, a dimension of x and b is n, and a dimension of A is $n*n$, in other words, there are $n^2$ elements. For the sparse linear equations, most of the $n^2$ elements of A are 0, and a proportion of 0 varies with fields and problems, and is generally lower than 0.1% or even lower.

(2) Preconditioner

There are two main methods for solving the large-scale sparse linear equations: a direct method (direct method) and an iterative method (iterative method). The direct method is to obtain an accurate solution of the equations by performing an operation including finite steps such as matrix factorization and triangular equations solving without considering a rounding error, and is also referred to as an accurate method. The iterative method is to give an initial solution vector, construct a vector column through specific computing (where a series of approximate solutions that approximate an accurate value are obtained through successive iterations), and use a limit of the vector column as a theoretical accurate solution of the sparse linear equations.

The iterative method has a low requirement for storage space, and has advantages in solving high-order well-conditioned sparse linear equations. However, when being used to solve an ill-conditioned problem, the iterative method has problems of a slow convergence speed or non-convergence and a difficulty in precision control. When solving equations, if data is slightly perturbed, an obtained result has a great fluctuation. Such a matrix is referred to as an ill-conditioned matrix.

Therefore, the preconditioner is introduced into the iterative method to solve the foregoing problems of the iterative method. The preconditioner is used to improve a property of a coefficient matrix of the linear equations, and transform the given linear equations into transformed equations (matrices) that are more easily to be solved, and is mainly used to accelerate the convergence of the iterative method. For example, in an iterative method based on Krylov subspace, for example, a conjugate gradient method or a generalized minimal residual method, the preconditioner is one of the most important modules. The preconditioner can help improve the convergence speed of the iterative method and help solve the ill-conditioned matrix. The preconditioner can be nested. For example, a method A and a method B are performed in sequence to jointly complete a function of the preconditioner, and sor or ilu is usually selected as a preconditioner at a bottom layer. This is mainly because an algorithm process of sor or ilu is relatively simple and convergence is good.

It may be considered that sor and ilu belong to a same type of algorithm, and are considered in a unified manner herein because of similar computing processes. A sor algorithm includes a Gauss-Seidel (Gauss-Seidel) algorithm, a symmetric Gauss-Seidel (symmetric Gauss-Seidel) algorithm, a symmetric successive over-relaxation (symmetric successive over-relaxation) algorithm, and the like. An ilu algorithm includes ilu(0), ilu(1), ilu(k), and the like. Different from the sor algorithm, an ilu algorithm process includes two steps: ilu factorization and ilu back substitution. However, the factorization and the back substitution are consistent in computation logic, and therefore may also be considered in a unified manner herein.

A lu algorithm is a core method for solving a sparse matrix by using the direct method. However, there are a large quantity of fill-ins (fill-ins) in a factorization process. As a result, efficiency of the lu algorithm is extremely low, and it is not suitable to place the lu algorithm in the iterative method as the preconditioner. Correspondingly, the ilu algorithm, which is an incomplete lu algorithm, may control a quantity of non-zero fill-ins based on a filling level, to achieve higher efficiency. The following uses ilu(0) as an example to describe an algorithm process. 0 indicates that a filling level is 0, in other words, no filling is performed. This means that if an original location is not zero, the original location is continuously updated in a factorization process; or if an original location is 0, the original location is not updated and is always 0. There is no doubt that solution accuracy of the ilu algorithm is lower than that of the lu algorithm. However, an accuracy requirement is satisfied when the ilu algorithm is used as the preconditioner. This is because final solution accuracy of the sparse equation is ensured by using the iterative method, and the preconditioner is only used as a means of accelerating the process.

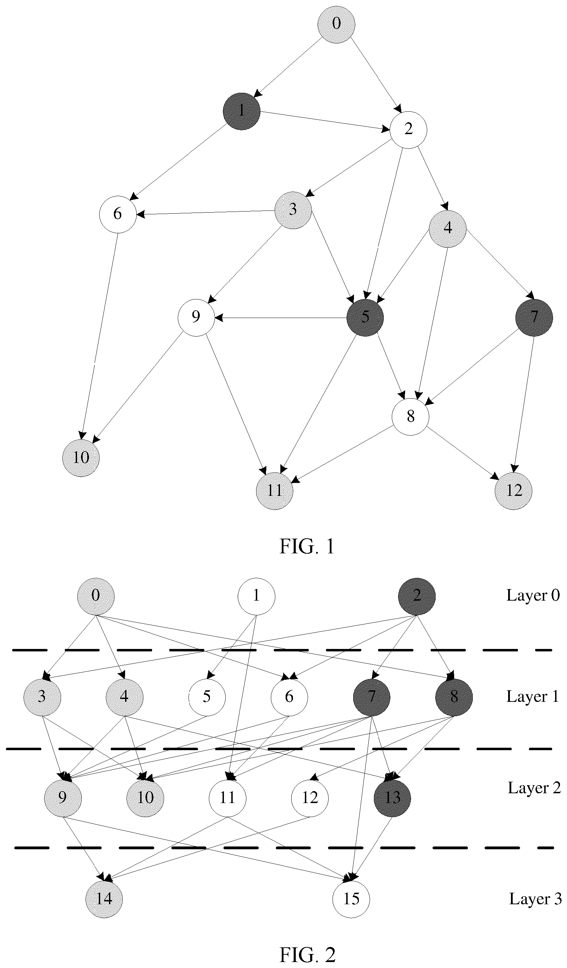

As described above, ilu(0) includes two processes: factorization and back substitution. The factorization is to perform numerical value factorization on an original matrix to obtain a lower triangular matrix L and an upper triangular matrix U. A back substitution process is a process for solving LUx=b, to be specific, solving Ly=b and Ux=y, one for solving the lower triangular matrix and one for solving the upper triangular matrix. Figure 1 is pseudocode of the factorization process of ilu(0). It should be noted that, because new non-zero filling is not performed for ilu(0), the lower triangular matrix and the upper triangular matrix that are obtained through factorization may completely use space of an original matrix A, in other words, local factorization is performed once.

Because Ux=y is exactly a reverse process of Ly=b, to be specific, Ly=b is a front-to-back process, and Ux=y is a back-to-front process. The processes are completely consistent in logic. The back substitution process of ilu(0) is not described herein again.

The Gauss-Seidel algorithm is a special case of the sor algorithm when a relaxation factor is 0, and an algorithm process of the Gauss-Seidel algorithm is similar to the process of Ly=b in the back substitution process of ilu(0).

It may be found, by horizontally comparing the foregoing three algorithm processes, that a common feature of the several algorithms is a preceding dependency. In abstract, if an $i^{th}$ row (ilu factorization) and an $i^{th}$ solution (ilu back substitution and the Gauss-Seidel algorithm) are collectively considered as an element i, the element i depends on a "preceding" element j when and only when a_ij is not 0 and j<i. Both the sor algorithm and the ilu algorithm satisfy this abstraction, that is, have the preceding dependency.

The preceding dependency makes it very difficult to accelerate multi-thread parallel execution. This is because a prerequisite for parallel execution is that there are enough unrelated computing tasks. Based on such a background, a conventional technology is mainly developed from how to mine parallel computing tasks, and may be generally divided into mining parallel tasks and creating parallel tasks. The mining parallel tasks is to analyze, by analyzing a dependency graph, which computing tasks can be executed in parallel without a dependency, and the creating parallel tasks is to forcibly break some dependencies, to create more computing tasks to be executed in parallel without a dependency.

(3) Coloring method

The coloring method is to all color elements in a dependency graph obtained from an original sparse matrix A with different colors. Elements of a same color are executed in parallel, and elements of different colors are executed in serial. There are a plurality of coloring methods. For example, coloring is performed after a threshold range is determined, to be specific, points within the threshold range are colored with different colors.

FIG. 1 is a diagram of a coloring example when a threshold is 1. 0 to 12 respectively represent different elements included in the original sparse matrix A. That the threshold is only 1 means that adjacent elements need to be colored with different colors, and non-adjacent elements may be colored with a same color. In the figure, 0, 3, 4, 10, 11, and 12 are colored with a same color and may be executed in parallel. 1, 5, and 7 are colored with a same color and may be executed in parallel. 2, 6, 8, and 9 are colored with a same color and may be executed in parallel. The elements 0, 3, 4, 10, 11, and 12, the elements 1, 5, and 7, and the elements 2, 6, 8, and 9 are respectively colored with three different colors. In FIG. 1, different gray scales are used to represent different colors. Elements of different colors need to be executed in serial.

(4) Method for nesting main diagonal blocks at a plurality of layers

The method for nesting main diagonal blocks at a plurality of layers is to create, by performing nested symmetric transformation to the original matrix A, tasks that can be executed in parallel. Any sparse matrix can be converted into

$$\begin{bmatrix} A_{11} & & A_{13} \\ & A_{22} & A_{23} \\ A_{31} & A_{32} & A_{33} \end{bmatrix}$$ through symmetric transformation, $A_{11}$ and $A_{22}$ are independent of each other, and may be executed by two threads in parallel, and the remaining part is executed in serial. If the foregoing symmetric transformation is invoked in a nested manner, more threads may be supported in parallel execution. Details are as follows.

$$[A] \rightarrow \begin{bmatrix} A_{11} & & A_{13} \\ & A_{22} & A_{23} \\ A_{31} & A_{32} & A_{33} \end{bmatrix} \rightarrow \begin{bmatrix} B_{11} & & B_{13} & & & & \\ & B_{22} & B_{23} & & & & A_{13} \\ B_{31} & B_{32} & B_{33} & & & & \\ & & & C_{11} & & C_{13} & \\ & & & & C_{22} & C_{23} & A_{23} \\ & & & C_{31} & C_{32} & C_{33} & \\ A_{31} & & & & A_{32} & & A_{33} \end{bmatrix} \rightarrow \cdots$$

**(5) Layering method**

The layering method is to perform layering on computation of different elements based on a dependency between the elements. Elements at a same layer may be computed simultaneously, and elements at different layers are executed in sequence.

As shown in FIG. 2, 16 elements are allocated to four layers, and are executed by three threads in parallel. Different gray scales represent different colors, and different colors represent computing tasks for which different threads need to be responsible.

In the conventional technology, the coloring method or the method for nesting main diagonal blocks at a plurality of layers is used to perform multi-thread parallel execution on the preconditioner, and there is a problem that algorithm convergence is reduced. For example, the iterative method based on the Krylov subspace is used together with ilu(0) as the preconditioner. When serial ilu(0) is used, 50 steps are iterated. After the foregoing two parallel methods are used, a quantity of iterations increases to 70. This is mainly because the coloring method or the method for nesting main diagonal blocks at a plurality of layers breaks an original dependency. The coloring method breaks the original dependency by using a graph, and the method for nesting main diagonal blocks at a plurality of layers breaks the original dependency through mathematical transformation. When the original dependency is broken by using the graph, a dependency that should be originally considered is ignored and parallel execution is forcibly performed, resulting in a reduction of convergence. When the original dependency is broken through mathematical transformation, a factorization sequence is changed. Different from lu, a result of ilu is closely related to the sequence. Therefore, the convergence is still changed (most likely reduced) through mathematical transformation. In addition, in the method for nesting main diagonal blocks at a plurality of layers, it is usually difficult to parallelize a remaining part other than a non-associated diagonal block part, resulting in low parallelization efficiency at a later stage of the algorithm. If the layering method is used, although element computing tasks at different layers can be executed by a plurality of threads in parallel, synchronization needs to be performed between the layers to ensure correctness. When a quantity of cores increases, synchronization overheads are significantly increased, resulting in a decrease in an overall algorithm speed. Further, jump memory access of a thread also leads to a decrease in memory access efficiency, and a memory bandwidth resource cannot be fully used.

This application provides a preconditioner processing method, and in particular, a preconditioner processing method for performing multi-thread parallel execution on a preconditioner based on a thread dependency. To be specific, a preconditioner processing device determines a thread dependency of at least one thread computing task included in the preconditioner. The thread dependency indicates that at least one dependent thread computing task needs to be in an executed state to execute a thread computing task. All threads of the preconditioner processing device sequentially execute, based on a sequence of memory access, to-be-executed thread computing tasks associated with at least one dependent thread computing task in an executed state, and outputs a preconditioner computing result based on an execution result of the at least one thread computing task. In this way, the preconditioner processing device converts a dependency between elements in a computing task of the preconditioner into a dependency between threads. The preconditioner processing device performs multi-thread parallel processing on the thread computing task based on the thread dependency. Each thread executes a lower-layer thread computing task after an upper-layer thread computing task on which the lower-layer thread computing task depends is in an executed state, so that full thread synchronization between layers is converted into point-to-point synchronization between threads. Compared with a conventional method in which a preconditioner executes computing tasks by using a plurality of threads in parallel based on a dependency between elements obtained through layering, and all threads between layers need to be synchronized to ensure correctness, to be specific, a lower-layer element computing task can be executed only after all upper-layer element computing tasks are in an executed state, resulting in a large quantity of parallel tasks and large overheads occupied for synchronization, in the method provided in this application, only point-to-point synchronization between threads needs to be performed based on the thread dependency, so that time consumed for synchronization between layers is reduced, and parallel execution efficiency of the preconditioner is improved.

The following describes implementations of embodiments of this application in detail with reference to the accompanying drawings.

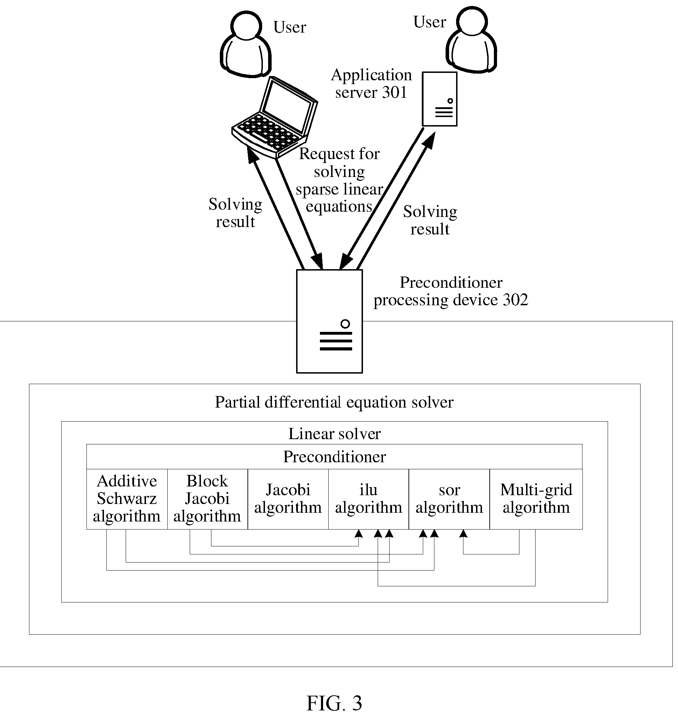

FIG. 3 is a diagram of a structure of a computer system according to this application. As shown in FIG. 3, the computer system 300 includes an application server 301 and a preconditioner processing device 302.

The application server 301 may be a terminal, for example, a mobile phone terminal, a tablet computer, a notebook computer, a virtual reality (virtual reality, VR) device, an augmented reality (augmented reality, AR) device, a mixed reality (Mixed Reality, MR) device, an extended reality (Extended Reality, ER) device, a camera, or a vehicle-mounted terminal, or may be an edge device (for example, a box carrying a chip having a processing capability), or the like.

The preconditioner processing device 302 may be a terminal, or may be another computing device that supports computation of sparse linear equations, for example, a server or a cloud device.

In a possible embodiment, the application server 301 and the preconditioner processing device 302 are different processors deployed on different physical devices (for example, servers or servers in a cluster). For example, an execution device 410 may be a graphics processing unit (graphics processing unit, GPU), a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, any conventional processor, or the like. The preconditioner processing device 302 may be a graphics processing unit (graphics processing unit, GPU), a neural network processing unit (neural network processing unit, NPU), a microprocessor, an application-specific integrated circuit (application-specific integrated circuit, ASIC), or one or more integrated circuits configured to control program execution in the solutions of this application.

In another possible embodiment, the application server 301 and the preconditioner processing device 302 are deployed on a same physical device, or the application server 301 and the preconditioner processing device 302 are a same physical device.

The application server 301 is configured to: determine, in response to a user operation, sparse linear equations that need to be solved, and send, to the preconditioner processing device 302 based on the sparse linear equations, a request for solving the sparse linear equations.

The preconditioner processing device 302 is configured to: receive the request for solving the sparse linear equations sent by the application server 301, compute the sparse linear equations, and return, to the application server 301, a result of solving the sparse linear equations.

At a software architecture layer, software in the high-performance computing field that includes core computing functions such as a partial differential equation solver is disposed in the preconditioner processing device 302. A core module of the partial differential equation solver is a linear solver. The linear solver supports the partial differential equation solver and indirectly supports the software in the high-performance computing field. The linear solver may include different algorithms such as a conjugate gradient method, a generalized minimal residual method, a generalized conjugate residual method, and a Chebyshev method.

A key module included in the linear solver is a preconditioner, and the preconditioner may include different algorithms such as an additive Schwarz algorithm, a block Jacobi algorithm, a Jacobi algorithm, an ilu algorithm, a sor algorithm, and a multi-grid algorithm. Preconditioners are in a nesting process, and different algorithms may be nested together. As shown by arrows in FIG. 3, a plurality of preconditioners are usually nested with the ilu algorithm or the sor algorithm finally.

The ilu algorithm and the sor algorithm in which multi-thread parallel execution is performed are used as an example. A user enters a to-be-solved problem into the software in the high-performance computing field through an operation interface of the preconditioner processing device 302, and the software invokes the partial differential equation solver to solve a partial differential equation included in the to-be-resolved problem. Before solving the partial differential equation, the partial differential equation solver discretizes the equation, and converts the problem of solving the partial differential equation into a problem of solving large-scale sparse linear equations. The partial differential equation solver invokes the linear solver to obtain a result of solving the large-scale sparse linear equations. In this process, the linear solver further uses the preconditioner to perform a preconditioner processing method to optimize an original sparse matrix of the large-scale sparse linear equations.

FIG. 3 is merely a diagram of a system architecture according to this application, and a location relationship between devices, components, modules, and the like shown in FIG. 3 does not constitute any limitation.

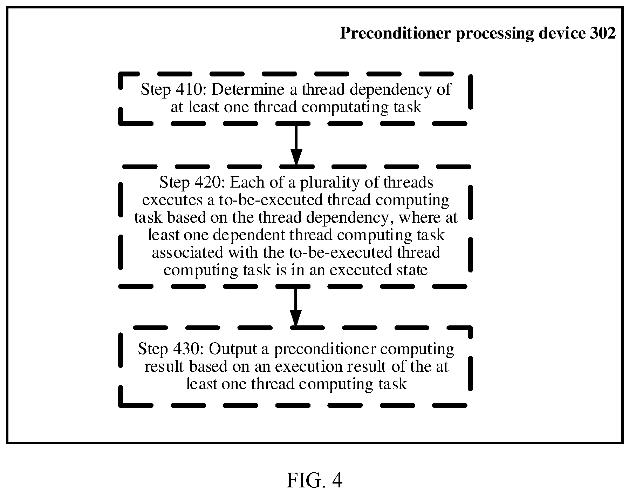

The following describes the preconditioner processing method in detail with reference to FIG. 4. An example in which a preconditioner in a preconditioner processing device 302 in FIG. 4 is an ilu algorithm or a sor algorithm is used for description.

Step 410: The preconditioner processing device 302 determines a thread dependency of at least one thread computing task.

The preconditioner processing device 302 obtains a thread dependency of all of the at least one thread computing task through analysis based on structure information of an original sparse matrix.

The foregoing original sparse matrix is a coefficient matrix of sparse linear equations. For example, A in sparse linear equations Ax = b is a coefficient matrix. The structure information refers to elements included in the original sparse matrix and an element arrangement sequence, and an original sparse matrix input in an array form includes structure information of the original sparse matrix.

In a possible implementation, the preconditioner processing device 302 performs task allocation based on the structure information of the original sparse matrix, to obtain a task allocation result, and then determines the thread dependency based on the task allocation result. The task allocation result indicates which element computing tasks at different computing layers need to be processed by each thread, and the thread dependency indicates that a thread computing task needs to be executed after which threads complete executing which thread computing tasks.

First, the preconditioner processing device 302 allocates, to a plurality of computing layers based on an element dependency in the original sparse matrix, a plurality of element computing tasks included in the original sparse matrix.

The element dependency in the original sparse matrix refers to a dependency existing in each element computing task in the original sparse matrix, to be specific, an element computing task in the original sparse matrix may have an associated element dependency, or may not have an associated element dependency.

Then, the preconditioner processing device 302 combines, into a thread computing task based on the task allocation result, element computing tasks that are at a same computing layer and that are executed by a same thread. The thread dependency of the thread computing task is similar to the element dependency of the element computing task, and the thread dependency does not necessarily exist between every two thread computing tasks.

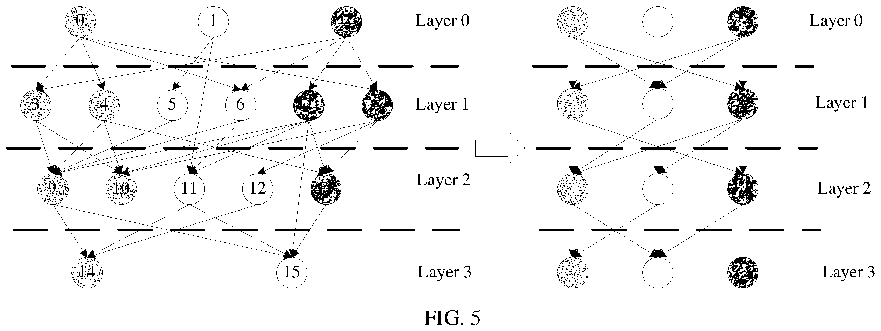

A task allocation result shown in FIG. 5 is used as an example for describing task allocation. After performing layer allocation on the original sparse matrix, the preconditioner processing device 302 evenly allocates element computing tasks at each computing layer to three threads. A layer 1 is used as an example. There are six element computing tasks in total, and the six element computing tasks are evenly allocated to three threads, where each thread is configured to execute two element computing tasks. Next, element computing tasks at each layer that belong to a same thread are integrated as one thread computing task, and each thread is responsible for one thread computing task at each layer. For example, a thread 0 is responsible for executing one thread computing task at each of a layer 0, the layer 1, a layer 2, and a layer 3.

Finally, the preconditioner processing device 302 determines the thread dependency of the at least one thread computing task based on the element dependency.

A manner of analyzing the thread dependency is described based on the task allocation result shown in FIG. 5. The preconditioner processing device 302 determines, when and only when any element computing task that needs to be executed by a thread A at a computing layer i depends on any element computing task that needs to be executed by a thread B at a computing layer j, that a thread computing task of the thread A at the computing layer i depends on a thread computing task of the thread B at the computing layer j, where i and j are integers. For example, when an element computing task 6 that needs to be executed by a thread 1 at a computing layer 1 depends on an element computing task 0 that needs to be executed by the thread 0 at a computing layer 0, it is determined that a thread computing task of the thread 1 at the computing layer 1 depends on a thread computing task of the thread 0 at the computing layer 0. In this way, the preconditioner processing device 302 visually represents the thread dependency as follows: Execution of the thread A at the computing layer i needs to depend on that execution of the thread B at the computing layer j is completed.

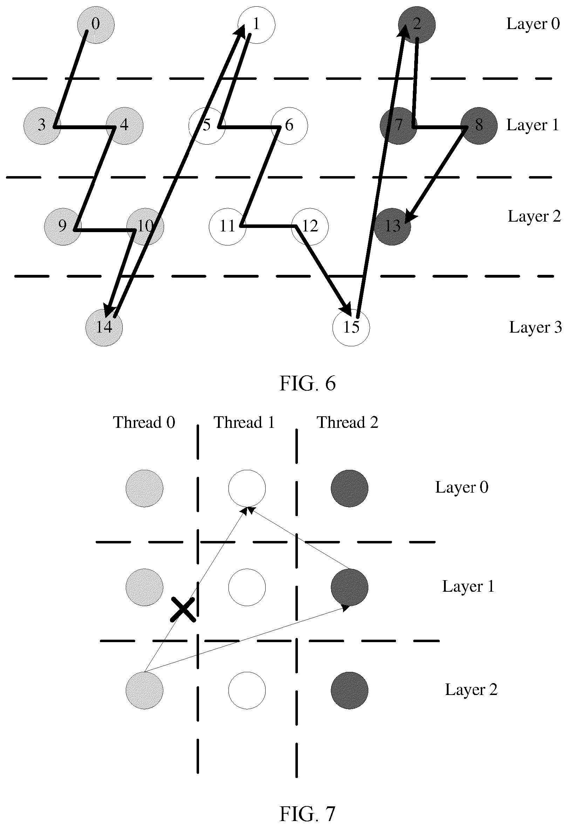

In another implementation, after the preconditioner processing device 302 performs layer allocation on the original sparse matrix, and before step 420 is performed, the preconditioner processing device 302 may further perform matrix rearrangement and redundant dependency shearing on the matrix obtained through layer allocation, to further improve overall computation efficiency of the preconditioner. For specific steps of the matrix rearrangement, refer to FIG. 6 and related steps. For specific steps of the redundant dependency shearing, refer to FIG. 7 and related steps. Details are not described herein.

Step 420: Each of a plurality of threads of the preconditioner processing device 302 executes a to-be-executed thread computing task based on the thread dependency.

All threads of the preconditioner processing device 302 sequentially execute, based on the thread dependency, to-be-executed thread computing tasks associated with at least one dependent thread computing task in an executed state.

In a possible implementation, before sequentially computing, based on the computing layer, a thread computing task for which each thread of the preconditioner processing device 302 is responsible, the thread further needs to determine whether the thread computing task is the to-be-executed thread computing task associated with the at least one dependent thread computing task in an executed state. For example, in FIG. 5, a thread computing task of the thread 1 at the computing layer 1 depends on a thread computing task of the thread 0 at the computing layer 0 and a thread computing task of a thread 2 at the computing layer 0.

Optionally, each thread of the preconditioner processing device 302 uses a flag bit to indicate whether a thread computing task is in an executed state, and each thread determines, based on a flag bit of a dependent thread computing task associated with the thread computing task, whether the thread computing task is a to-be-executed thread computing task whose dependent thread computing task is in an executed state.

In this embodiment of this application, the flag bit is a mask (mask) flag bit. If a flag bit corresponding to a thread computing task in the mask is 1, it indicates that the thread computing task is in an executed state; or if a flag bit corresponding to a thread computing task in the mask is 0, it indicates that the thread computing task is in an unexecuted state. Alternatively, if a flag bit corresponding to a thread computing task in the mask is 0, it indicates that the thread computing task is in an executed state; or if a flag bit corresponding to a thread computing task in the mask is 1, it indicates the thread computing task is in an unexecuted state.

Step 430: The preconditioner processing device 302 outputs a preconditioner computing result based on an execution result of the at least one thread computing task.

After each thread of the preconditioner processing device 302 separately executes thread computing tasks at all the computing layers, the preconditioner computing result is output based on execution results of all the thread computing tasks.

Optionally, the thread computing tasks included in the preconditioner include sor algorithm back substitution, ilu algorithm back substitution, ilu algorithm factorization, and the like. If the thread computing task is the sor algorithm back substitution, input data obtained by the thread is a right-hand side vector b and an initial value vector x of the sparse linear equations, and the output preconditioner computing result is a solution vector x. If the thread computing task is the ilu algorithm back substitution, input data obtained by the thread is a right-hand side vector b of the sparse linear equations, and the output preconditioner computing result is a solution vector x. If the thread computing task is the ilu algorithm factorization, input data obtained by the thread is an input matrix, and the output preconditioner computing result is a matrix obtained through factorization.

The preconditioner processing method may form a third-party mathematical library, and is used by a linear solver framework (for example, a portable, extensible toolkit for scientific computation (Portable, Extensible Toolkit for Scientific Computation, PETSc) or a high performance preconditioner (High Performance Preconditioner, Hypre)) in a mathematical library manner, so that the preconditioner processing method is indirectly used by an upper-layer application such as software in the high-performance computing field. In addition, the preconditioner processing method may alternatively be directly used by a solver framework or an upper-layer application in a form of code. In a multi-thread framework, the thread computing tasks such as the sor algorithm back substitution, the ilu algorithm back substitution, and the ilu algorithm factorization are executed on different threads in parallel.

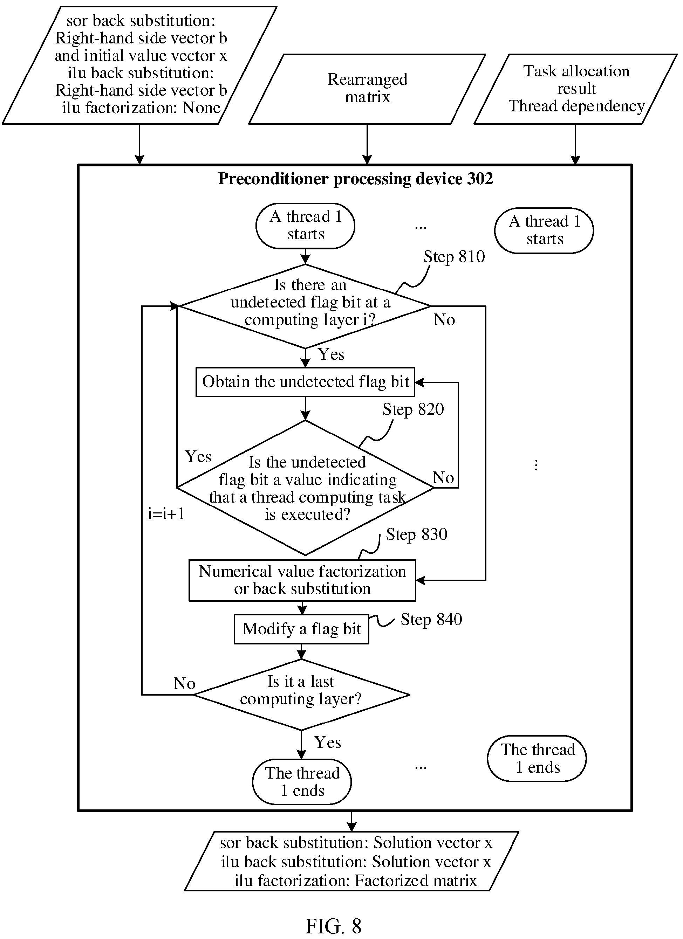

In this embodiment, for a specific manner of performing step 420 and step 430 by each thread, refer to FIG. 8 and related descriptions. Details are not described herein.

Based on the foregoing preconditioner processing method, the preconditioner processing device converts a dependency between elements in a computing task of the preconditioner into a dependency between threads. The preconditioner processing device performs multi-thread parallel processing on the thread computing task based on the thread dependency. Each thread executes a lower-layer thread computing task after an upper-layer thread computing task on which the lower-layer thread computing task depends is in an executed state, so that full thread synchronization between layers is converted into point-to-point synchronization between threads. Compared with a conventional method in which a preconditioner executes computing tasks by using a plurality of threads in parallel based on a dependency between elements obtained through layering, and all threads between layers need to be synchronized to ensure correctness, to be specific, a lower-layer element computing task can be executed only after all upper-layer element computing tasks are in an executed state, resulting in a large quantity of parallel tasks and large overheads occupied for synchronization, in the method provided in this application, only point-to-point synchronization between threads needs to be performed based on the thread dependency, so that time consumed for synchronization between layers is reduced, and parallel execution efficiency of the preconditioner is improved.

The following describes, with reference to FIG. 6 in detail, a principle of performing matrix rearrangement by the preconditioner processing device 302.

As shown in FIG. 6, the preconditioner processing device 302 arranges, together, an element computing task for which each thread is responsible. To be specific, for each thread, the preconditioner processing device 302 arranges, together, a thread computing task for which the thread needs to be responsible at each computing layer (where the thread computing task at each computing layer includes one or more element computing tasks, and the element computing task is shown in FIG. 6), so that each thread can continuously perform memory access when performing respective computation, thereby fully utilizing a memory bandwidth. In addition, different from rearrangement of related work, the rearrangement in this embodiment is merely intended to optimize memory access continuity, and does not change any dependency or dependency sequence, and therefore does not affect a solving result.

The following describes, with reference to FIG. 7 in detail, a principle of performing redundant dependency shearing by the preconditioner processing device 302.

After determining the thread dependency of the at least one thread computing task, the preconditioner processing device 302 deletes a redundant dependency in the thread dependency of the at least one thread computing task. The redundant dependency means that a dependency of a thread computing task can be indirectly represented by a group of thread dependencies other than the redundant dependency. Optionally, the group of thread dependencies includes two or more thread dependencies.

For example, in an example in FIG. 7, computation of a thread 0 at a layer 2 depends on computation of a thread 1 at a computing layer 0 and computation of a thread 2 at a computing layer 1. In addition, computation of the thread 2 at the computing layer 1 depends on computation of the thread 1 at the computing layer 0. Therefore, a dependency of the thread 0 at the computing layer 2 on the thread 1 at the computing layer 0 is redundant. Because the dependency is indirectly ensured by a dependency of the thread 2 on the thread 1, when a similar dependency exists, a redundant part is removed, so that inter-layer synchronization overheads are further reduced, thereby improving overall computation efficiency of the preconditioner.

The following describes, with reference to FIG. 8 in detail, a procedure in which all threads of the preconditioner processing device 302 sequentially execute thread computing tasks at all computing layers. A thread 1 is used as an example. The procedure includes step 810 to step 850.

Step 810: Before executing a thread computing task at a computing layer i, the thread 1 determines whether there is an undetected flag bit, and if there is an undetected flag bit, performs step 820; or if there is no undetected flag bit, performs step 830.

The thread 1 detects a flag bit of a dependent thread task associated with the thread computing task at the computing layer i, to determine whether there is an undetected flag bit in the flag bit of the associated dependent thread task.

Step 820: The thread 1 obtains the undetected flag bit, determines whether the undetected flag bit is a value indicating that the thread computing task is executed, and if the undetected flag bit is the value indicating that the thread computing task is executed, performs step 810; or if the undetected flag bit is not the value indicating that the thread computing task is executed, determines again whether the undetected flag bit is the value indicating that the thread computing task is executed.

The thread 1 fetches (fetches) the undetected flag bit by using an atomic operation, and if the undetected flag bit is true (for example, a value of the flag bit is 1), performs step 810; or if the undetected flag bit is not true (for example, a value of the flag bit is 0), determines again whether the undetected flag bit is true.

Optionally, the thread 1 periodically determines whether the undetected flag bit is true, to be specific, the thread 1 determines whether the undetected flag bit is true at an interval of preset duration every two times, and if the undetected flag bit is not true, continuously detects whether the undetected flag bit is true.

Step 830: The thread 1 executes the thread computing task at the computing layer i.

The thread 1 executes the thread computing task at the computing layer i based on input data, and outputs a computing result of the thread computing task at the computing layer i.

For example, the thread computing task at the computing layer i is a sor back substitution computing task, the input data received by the thread 1 is a right-hand side vector b and an initial value vector x, and the computing result is a solution vector x.

For another example, the thread computing task at the computing layer i is an ilu back substitution computing task, the input data received by the thread 1 is a right-hand side vector b, and the computing result is a solution vector x.

For another example, the thread computing task at the computing layer i is an ilu factorization computing task, the input data received by the thread 1 is a rearranged matrix of an original sparse matrix, and the computing result is a factorized matrix.

Step 840: The thread 1 modifies a flag bit of the thread computing task at the computing layer i.

After outputting the computing result of the thread computing task at the computing layer i, that is, after the thread computing task is in an executed state, the thread 1 modifies the flag bit of the thread computing task at the computing layer i to the value, for example, true, indicating that the thread computing task is executed.

Optionally, after modifying the flag bit of the thread computing task at the computing layer i, the thread 1 may further notify a thread that has a thread dependency with the thread computing task at the computing layer i.

Step 850: The thread 1 sets i=i+1, and performs step 810 to step 840.

The thread 1 cyclically performs step 810 to step 850 until the thread 1 completes executing thread computing tasks at all computing layers for which the thread 1 is responsible.

In this embodiment, a procedure in which a thread in the preconditioner processing device 302 processes a thread computing task of a preconditioner is described in the foregoing step 810 to step 850. A plurality of threads included in the preconditioner processing device 302 further process, in parallel, thread computing tasks for which the plurality of threads are respectively responsible. After all of the threads of the preconditioner processing device 302 complete executing the thread computing tasks for which the threads are respectively responsible, optimization processing on the original sparse matrix by the preconditioner is completed, and a preconditioner computing result is output.

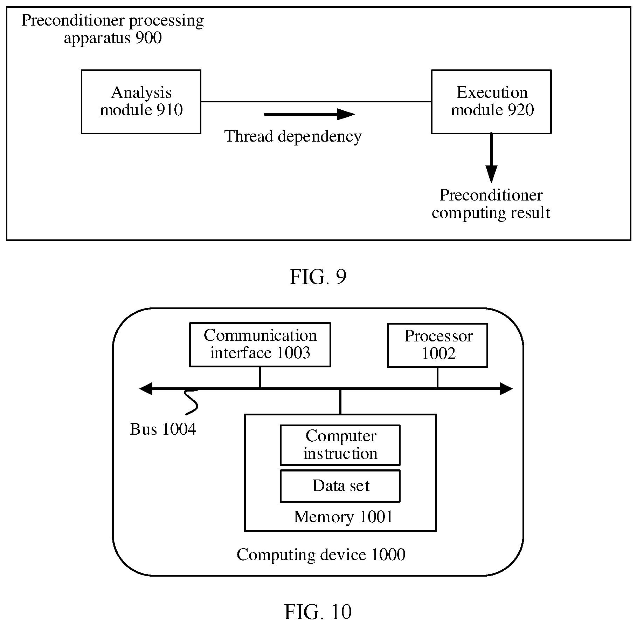

The foregoing describes, with reference to FIG. 3 to FIG. 8 in detail, the preconditioner processing method provided in embodiments. The following describes, with reference to FIG. 9, a preconditioner processing apparatus provided in an embodiment.

FIG. 9 is a diagram of a possible preconditioner processing apparatus according to an embodiment. The preconditioner processing apparatus may be configured to implement a function of the execution device in the foregoing method embodiments, and therefore can also achieve beneficial effects of the foregoing method embodiments. In this embodiment, the preconditioner processing apparatus may be the application server 301 and the preconditioner processing device 302 shown in FIG. 3, or may be a module (for example, a chip) used in the server.

The preconditioner processing apparatus 900 includes an analysis module 910 and an execution module 920. The preconditioner processing apparatus 900 is configured to implement a function of the preconditioner processing device 302 in the method embodiment shown in FIG. 4.

The analysis module 910 is configured to determine a thread dependency of at least one thread computing task, where the thread dependency indicates that each of a plurality of threads can execute a thread computing task when at least one dependent thread computing task associated with the thread computing task is in an executed state. For example, the analysis module 910 is configured to perform step 410 in FIG. 4.

The execution module 920 is configured to indicate the plurality of threads to execute to-be-executed thread computing tasks based on the thread dependency, where at least one dependent thread computing task associated with the to-be-executed thread computing task is in an executed state. For example, the execution module 920 is configured to perform step 420 in FIG. 4.

The execution module 920 is further configured to output a preconditioner computing result based on an execution result of the at least one thread computing task. For example, the execution module 920 is configured to perform step 430 in FIG. 4.

In a possible implementation, the analysis module 910 is specifically configured to convert, into the thread dependency, an element dependency existing in at least one element computing task included in an original sparse matrix, where the element dependency indicates that at least one dependent element computing task needs to be in an executed state to execute an element computing task.

In a possible implementation, the analysis module 910 is specifically configured to: allocate, to a plurality of computing layers based on the element dependency, a plurality of element computing tasks included in the original sparse matrix, where element computing tasks at a same computing layer can be executed simultaneously; combine, into a thread computing task based on a task allocation result, element computing tasks that are at the same computing layer and that are executed by a same thread, where the task allocation result indicates which thread in the plurality of threads executes the element computing tasks; and determine the thread dependency of the at least one thread computing task based on the element dependency.

In a possible implementation, the analysis module 910 is further configured to delete a redundant dependency in the thread dependency of the at least one thread computing task. A dependency of a thread computing task indicated by the redundant dependency can be indirectly represented by a group of thread dependencies other than the redundant dependency.

In a possible implementation, the preconditioner processing apparatus 900 further includes a preparation module. The preparation module is configured to perform matrix rearrangement on the original sparse matrix based on the plurality of computing layers and a sequence of memory access, to obtain a rearranged matrix, where the sequence of memory access is a sequence of memory access of the plurality of threads for the at least one thread computing task, and the at least one thread computing task executed by the threads is arranged together in the rearranged matrix.

In a possible implementation, the execution module 920 is specifically configured to indicate all of the plurality of threads to sequentially execute the to-be-executed thread computing tasks based on the rearranged matrix and the sequence of memory access.

In a possible implementation, the execution module 920 is further configured to determine, based on a flag bit of the at least one thread computing task, that a thread computing task associated with at least one dependent thread computing task in an executed state is a to-be-executed thread computing task, where the flag bit indicates whether the thread computing task is in an executed state.

It should be understood that the preconditioner processing apparatus 900 in this embodiment of this application may be implemented by using a GPU, an NPU, an ASIC, or a programmable logic device (programmable logic device, PLD). The PLD may be a complex programmable logical device (complex programmable logical device, CPLD), a field programmable gate array (field programmable gate array, FPGA), generic array logic (generic array logic, GAL), or any combination thereof. In addition, when the method shown in FIG. 4 is implemented by using software, the preconditioner processing apparatus 900 and modules thereof may also be software modules.

The preconditioner processing apparatus 900 in this embodiment of this application may be corresponding to performing the method described in embodiments of this application, and the foregoing and other operations and/or functions of the units in the preconditioner processing apparatus 900 are respectively configured to implement corresponding procedures of the methods in FIG. 4. For brevity, details are not described herein again.

An embodiment of this application further provides a computing device. FIG. 10 is a diagram of a structure of a computing device according to an embodiment of this application. The computing device 1000 includes a memory 1001, a processor 1002, a communication interface 1003, and a bus 1004. The memory 1001, the processor 1002, and the communication interface 1003 are communicatively connected to each other through the bus 1004. In this embodiment, the computing device 1000 may be the application server 301 or the preconditioner processing device 302 in FIG. 3.

The memory 1001 may be a read-only memory, a static storage device, a dynamic storage device, or a random access memory. The memory 1001 may store computer instructions. When the computer instructions stored in the memory 1001 are executed by the processor 1002, the processor 1002 and the communication interface 1003 are configured to perform steps in a preconditioner processing method of a software system. For example, the processor 1002 is configured to: perform step 410 to step 430 in the preconditioner processing method shown in FIG. 4, and perform functions of the modules of the preconditioner processing apparatus 900. The memory may further store a data set. For example, some storage resources in the memory 1001 are allocated to an area, and the area is used for storing a program for implementing a function of a preconditioner in this embodiment of this application.

The processor 1002 may be a general-purpose CPU, an application-specific integrated circuit (application-specific integrated circuit, ASIC), a GPU, or any combination thereof. The processor 1002 may include one or more chips. The processor 1002 may include an AI accelerator, for example, an NPU.

The communication interface 1003 uses a transceiver module, for example, but not limited to a transceiver, to implement communication between the computing device 1000 and another device or a communication network. For example, data such as an original sparse matrix may be obtained through the communication interface 1003.

The bus 1004 may include a path for transmitting information between components (for example, the memory 1001, the processor 1002, and the communication interface 1003) of the computing device 1000.

The computing device 1000 may be a computer (for example, a server) in a cloud data center, or a computer or a terminal in an edge data center.

The application server 301 and/or the preconditioner processing device 302 may be deployed on each computing device 1000.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a terminal device. Certainly, the processor and the storage medium may exist in a network device or the terminal device as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, a computer, a server, or a data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid state drive (solid state drive, SSD). The foregoing descriptions are merely specific implementations of this application, but are not intended to limit the protection scope of this application. Any modification or replacement readily conceived by a person skilled in the art within the technical scope disclosed in this application shall fall within the protection scope of this application. Therefore, the protection scope of this application shall be subject to the protection scope of the claims.

**Claims**

1. A preconditioner processing method, performed by a preconditioner processing device, wherein the preconditioner processing device comprises a plurality of threads, each thread is configured to execute at least one thread computing task comprised in a preconditioner, and the method comprises:

determining a thread dependency of the at least one thread computing task, wherein the thread dependency indicates that each of the plurality of threads can execute a thread computing task when at least one dependent thread computing task associated with the thread computing task is in an executed state;

executing, by the plurality of threads, to-be-executed thread computing tasks based on the thread dependency, wherein at least one dependent thread computing task associated with the to-be-executed thread computing task is in an executed state; and

outputting a preconditioner computing result based on an execution result of the at least one thread computing task.

2. The method according to claim 1, wherein the determining a thread dependency of the at least one thread computing task comprises:

converting, into the thread dependency, an element dependency existing in at least one element computing task comprised in an original sparse matrix, wherein the element dependency indicates that at least one dependent element computing task needs to be in an executed state to execute an element computing task.

3. The method according to claim 2, wherein the converting, into the thread dependency, an element dependency existing in at least one element computing task comprised in an original sparse matrix comprises:

allocating, to a plurality of computing layers based on the element dependency, a plurality of element computing tasks comprised in the original sparse matrix, wherein element computing tasks at a same computing layer can be executed simultaneously;

combining, into a thread computing task based on a task allocation result, element computing tasks that are at the same computing layer and that are executed by a same thread, wherein the task allocation result indicates that the element computing tasks are executed by a specified thread in the plurality of threads; and

determining the thread dependency of the at least one thread computing task based on the element dependency.

4. The method according to claim 3, wherein after the determining the thread dependency of the at least one thread computing task based on the element dependency, the method further comprises:

deleting a redundant dependency in the thread dependency of the at least one thread computing task, wherein a dependency of a thread computing task indicated by the redundant dependency can be indirectly represented by a group of thread dependencies other than the redundant dependency.

5. The method according to claim 3 or 4, wherein before the executing, by the plurality of threads, to-be-executed thread computing tasks based on the thread dependency, the method further comprises:

performing matrix rearrangement on the original sparse matrix based on the plurality of computing layers and a sequence of memory access, to obtain a rearranged matrix, wherein the sequence of memory access is a sequence of memory access of the plurality of threads for the at least one thread computing task, and the at least one thread computing task executed by the threads is arranged together in the rearranged matrix.

6. The method according to claim 5, wherein the executing, by the plurality of threads, to-be-executed thread computing tasks based on the thread dependency comprises:

sequentially executing, by all of the plurality of threads, the to-be-executed thread computing tasks based on the rearranged matrix and the sequence of memory access.

7. The method according to any one of claims 1 to 6, wherein before the executing, by the plurality of threads, to-be-executed thread computing tasks based on the thread dependency, the method further comprises:

determining, based on a flag bit of the at least one thread computing task, that a thread computing task associated with at least one dependent thread computing task in an executed state is a to-be-executed thread computing task, wherein the flag bit indicates whether the thread computing task is in an executed state.

8. A preconditioner processing apparatus, wherein the apparatus executes a plurality of threads, each thread is configured to execute at least one thread computing task comprised in a preconditioner, and the apparatus comprises:

an analysis module, configured to determine a thread dependency of the at least one thread computing task, wherein the thread dependency indicates that each of the plurality of threads can execute a thread computing task when at least one dependent thread computing task associated with the thread computing task is in an executed state; and

an execution module, configured to execute, by the plurality of threads, to-be-executed thread computing tasks based on the thread dependency, wherein at least one dependent thread computing task associated with the to-be-executed thread computing task is in an executed state, wherein
the execution module is further configured to output a preconditioner computing result based on an execution result of the at least one thread computing task.

9. A computing device, wherein the computing device comprises a processor and a memory, wherein the memory is configured to store instructions, the processor is configured to execute the instructions stored in the memory, and when the processor executes the instructions stored in the memory, the processor is configured to perform operation steps in the preconditioner processing method according to any one of claims 1 to 7.

10. A computer system, wherein the system comprises an application server and a preconditioner processing device, the application server is configured to send, to the preconditioner processing device, a request for solving sparse linear equations, and the preconditioner processing device is configured to perform the preconditioner processing method according to any one of claims 1 to 7 when receiving the request for solving the sparse linear equations.

FIG. 1

FIG. 2

User

User

Application
server 301

Request for
solving
sparse linear
equations

Solving
result

Solving
result

Preconditioner
processing device 302

Partial differential equation solver

Linear solver

Preconditioner

| Additive Schwarz algorithm | Block Jacobi algorithm | Jacobi algorithm | ilu algorithm | sor algorithm | Multi-grid algorithm |
|---|---|---|---|---|---|

FIG. 3

**Preconditioner processing device 302**

Step 410: Determine a thread dependency of at least one thread computating task

↓

Step 420: Each of a plurality of threads executes a to-be-executed thread computing task based on the thread dependency, where at least one dependent thread computing task associated with the to-be-executed thread computing task is in an executed state

↓

Step 430: Output a preconditioner computing result based on an execution result of the at least one thread computing task

FIG. 4

FIG. 5

FIG. 6

FIG. 7

FIG. 8

Preconditioner processing
apparatus 900

| Analysis module 910 | → Thread dependency → | Execution module 920 |

↓

Preconditioner
computing result

FIG. 9

Computing device 1000

| Communication interface 1003 | | Processor 1002 |

Bus 1004

Computer instruction

Data set

Memory 1001

FIG. 10

## INTERNATIONAL SEARCH REPORT

| International application No. |
| --- |
| **PCT/CN2023/101175** |

| A. | CLASSIFICATION OF SUBJECT MATTER |
| --- | --- |

G06F 9/50(2006.01)i

According to International Patent Classification (IPC) or to both national classification and IPC

| B. | FIELDS SEARCHED |
| --- | --- |

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNTXT, USTXT, VEN, CNKI, IEEE: 预条件子, 稀疏, 分层, 并行, 线程, 迭代法, pre w condition+, spars+, level schedul+, parallel, thread, iterative method

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | PARK, J. S. et al. "Sparsifying Synchronization for High-Performance Shared-Memory Sparse Triangular Solver" *International Supercomputing Conference*, 22 June 2014 (2014-06-22), page 2, paragraph 1 to page 8, paragraph 2 | 1-10 |
| A | CN 112446004 A (WUXI JIANGNAN INSTITUTE OF COMPUTING TECHNOLOGY) 05 March 2021 (2021-03-05) entire document | 1-10 |
| A | CN 113553288 A (PEKING UNIVERSITY) 26 October 2021 (2021-10-26) entire document | 1-10 |
| A | CN 114385972 A (UNIVERSITY OF SCIENCE & TECHNOLOGY BEIJING et al.) 22 April 2022 (2022-04-22) entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 September 2023** | **12 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/101175**

| Patent document cited in search report | | | Publication date (day/month/year) | Patent family member(s) | Publication date (day/month/year) |
|---|---|---|---|---|---|
| CN | 112446004 | A | 05 March 2021 | None | |
| CN | 113553288 | A | 26 October 2021 | None | |
| CN | 114385972 | A | 22 April 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211275678